# EUROPÄISCHE PATENTSCHRIFT

(11) **EP 1 344 684 B1**
(45) Veröffentlichungstag und Bekanntmachung des Hinweises auf die Patenterteilung: **12.04.2006**
(21) Anmeldenummer: 03003625.5
(22) Anmeldetag: 18.02.2003
(51) Int. Cl.: B60Q 3/02, F21V 5/04

(54) **Innenleuchte für Fahrzeuge mit einer Streuscheibe**
Vehicle interior lamp with diffusing cover
Lampe intérieure de véhicule avec verre diffuseur

(30) Priorität: 12.03.2002 DE 10210780
(43) Veröffentlichungstag der Anmeldung: 17.09.2003
(73) Patentinhaber: Hella KGaA Hueck & Co., 59552 Lippstadt (DE)
(72) Erfinder: Schürhoff, Konrad, 59302 Oelde (DE)
(74) Vertreter: Maucher, Wolfgang

(56) Entgegenhaltungen:
- DE-A- 19 728 354
- DE-A- 19 831 004
- DE-U- 20 000 644

## Beschreibung

Die Erfindung betrifft eine Innenleuchte für Fahrzeuge, insbesondere für Kraftfahrzeuge, mit einer das oder die Leuchtmittel abdeckenden Streuscheibe aus Glas oder Kunststoff, welche an ihrer Oberfläche Optikelemente zur Streuung oder Auslenkung des abgegebenen Lichts aufweist. Bevorzugt soll dabei diese Innenleuchte als Leselicht dienen.

Derartige Innenleuchten sind bekannt und haben ein annähernd brillantes Erscheinungsbild mit geringen Streueffekten, welche die Lichtquelle oder Glühlampe und deren Lichtschwerpunkt stark sichtbar machen und bei den Fahrzeuginsassen eine Blendung verursachen können.

Aus DE 198 31 004 A1 ist eine Lichtscheibe für eine Leuchte für ein Kraftfahrzeug bekannt, die gemäß Spalte 1, Zeile 58 in zwei Bereiche unterteilt ist. Dabei sind diese Bereiche konzentrisch angeordnet und ein durchscheinender Bereich bildet einen inneren Bereich und ist von einem durchsichtigen Bereich umgeben. Eine derartige Leuchte ist als Innenleuchte für Fahrzeuge nicht geeignet, weil vor allem der durchsichtige Bereich zu einer Blendwirkung führen kann.

Es besteht deshalb die Aufgabe, eine Innenleuchte der eingangs genannten Art, insbesondere ein Leselicht zu schaffen, bei welchem die Blendwirkung reduziert ist.

Zur Lösung dieser Aufgabe ist die eingangs definierte Innenleuchte dadurch gekennzeichnet, dass wenigstens ein Teil der an der Streuscheibe vorgesehenen Optikelemente einen ersten zentralen, nicht diffus streuenden Bereich und einen zweiten, diesen ersten Bereich ganz oder teilweise umgebenden, diffus streuenden Bereich aufweist. Durch diese spezielle Struktur im Randbereich der an der Streuscheibe vorgesehenen Optikelemente wird die Blendwirkung der Innenleuchte beziehungsweise des von ihr gebildeten Leselichts reduziert. Die Randbereiche der Optikelemente, die primär nicht für die Lichtverteilung bestimmt sind, reduzieren mit ihrer diffus streuenden Oberflächenstruktur die Blendung der Fahrzeuginsassen beziehungsweise der Betrachter. Somit kann eine Innenleuchte mit Leselichtfunktion praktisch blendfrei und dennoch ein gutes Leselicht erzeugend gestaltet werden. Der erste zentrale, nicht diffus streuende Bereich bewirkt dabei eine erwünschte große Helligkeit, wobei die diesen Bereich durchlaufenden Strahlen, insbesondere bei einer etwas schrägen Anordnung der Streuscheibe dieser Innenleuchte das Auge des Fahrzeuginsassen kaum oder gar nicht treffen.

Der erste Bereich des jeweiligen Optikelements kann glatt und/oder poliert, gegebenenfalls sogar hochglanzpoliert sein, so dass der durch diesen Bereich fallende Lichtanteil weitgehend geradlinig auf eine zu beleuchtende Stelle fällt, so dass bei entsprechender Einbauanordnung die Innenleuchte als gezieltes Leselicht genutzt werden kann.

Der zweite Bereich des Optikelements kann das durchtretende Licht streuende Oberflächenrauhigkeiten, Narbungen oder Strukturen aufweisen, um die durch diesen zweiten Bereich des jeweiligen Optikelements fallenden Lichtanteil, der auch das Auge des Betrachters trifft, zu streuen und ihm dadurch seine Blendwirkung zu nehmen. Die entsprechenden Optikelemente können erosiv beziehungsweise mit Hochgeschwindigkeitsfräsern in ein entsprechendes Kunststoffspritzgießwerkzeug eingebracht werden.

Der erste Bereich kann etwa kreisförmig ausgebildet und von dem zweiten Bereich vollständig umgeben sein. Somit ergibt sich auch an jedem Optikelement eine weitgehend gleichmäßige Aufteilung des Lichts in gestreutes und nichtgestreutes Licht.

Das jeweilige Optikelement kann vieleckig oder viereckig begrenzt sein und die Optikelemente können mit ihren Seiten jeweils einstückig aneinander liegen. Bei einer quadratischen Grundrissform des jeweiligen Optikelements können also alle Optikelemente jeweils rasterartig einander unmittelbar benachbart sein und einstückig in die Streuscheibe eingearbeitet sein.

Dabei können die Optikelemente auf der dem Leuchtmittel zu- oder abgewandten Seite oder Oberfläche der Streuscheibe angeordnet sein und insbesondere eine gewölbte Oberfläche haben, so dass sie in gewissem Umfange linsenartig wirken können.

Die Optikelemente können in der Mitte ihres Grundrisses aufgrund der Wölbung die größte Dicke und in den Eckbereichen die geringste Dicke haben. Die Wölbung kann also möglichst gleichmäßig über den Grundriss der Optikelemente verlaufen, um eine gute Lichtverteilung zu bewirken, wobei in vorteilhafter Weise in dem aufgrund der Wölbung am stärksten abfallenden Randbereichen des jeweiligen Optikelements das Licht gestreut und somit an einer Blendung des Benutzers gehindert wird.

Das Verhältnis der Abmessungen des ersten Bereichs und des zweiten Bereichs kann für alle an der Streuscheibe vorgesehenen Optikelemente gleich oder zumindest bereichsweise unterschiedlich sein. Somit können an der Streuscheibe bereichsweise unterschiedliche Leuchteffekte erzielt werden, um unterschiedliche Formen oder Größen einer solchen Streuscheibe zu berücksichtigen.

Beispielsweise ist es möglich, dass am und nahe dem Rand der Streuscheibe Optikelemente angeordnet sind, deren erster Bereich kleiner als bei den im Mittelfeld der Streuscheibe angeordneten Optikelementen ist. Dies ist vor allem dann zweckmäßig, wenn der Rand der Streuscheibe dem Blickfeld des Benutzers näher liegt, so dass es günstig ist, einen größeren Lichtanteil zu streuen, um eine Blendwirkung zu vermindern oder zu vermeiden.

Eine zweckmäßige Ausgestaltung der erfindungsgemäßen Innenleuchte kann darin bestehen, dass sie für unterschiedliche Beleuchtungen und Leuchtmittel mehrere Streuscheiben oder Streuscheibenabschnitte aufweist, von denen wenigstens eine Streuscheibe oder ein Streuabschnitt für eine Leseleuchte die Optikelemente mit einem ersten Bereich und einem zweiten Bereich aufweist. Die Erfindung kann also auch bei solchen Innenleuchten verwirklicht werden, die mehrere Leuchtfunktionen und entsprechende Abschnitte oder Bereiche haben, wobei beispielsweise eine Innenraumbeleuchtung und eine Leseleuchte kombiniert sein können, die gegebenenfalls in demselben gemeinsamen Gehäuse einander benachbart angeordnet sind, da diese einzelnen Leuchten auch unabhängig voneinander ein- und ausgeschaltet werden können, können sie je nach Bedarf einzeln, nacheinander oder auch gemeinsam benutzt werden.

Nachstehend ist ein Ausführungsbeispiel der Erfindung anhand der Zeichnung näher beschrieben. Es zeigt in zum Teil schematisierter Darstellung:
- Fig.1: eine Draufsicht einer erfindungsgemäßen Leseleuchte von ihrer Ober- oder Rückseite aus auf die Innenseite der teilweise mit ihrer Rasterung gezeichneten Streuscheibe,
- Fig.2: in stark vergrößertem Maßstab einen Schnitt durch eine Streuscheibe mit einer Markierung der einander benachbarten ersten und zweiten Bereiche,
- Fig.3: eine Ansicht eines Teilbereichs einer Streuscheibe mit den erfindungsgemäßen Optikelementen, die jeweils einen ersten zentralen, nicht diffus streuenden, kreisförmigen Bereich und einen diesen vollständig umgebenden zweiten Bereich aufweisen, der das Licht aufgrund streuender Oberflächenrauhigkeiten, Narbungen oder Strukturen diffus streut, sowie
- Fig.4: in noch weiter vergrößertem Maßstab eine schaubildliche Darstellung eines einzelnen erfindungsgemäßen Optikelements, welchem an der zugehörigen Streuscheibe zahlreiche weitere derartige Optikelemente einstückig benachbart sind.

Eine im ganzen mit 1 bezeichnete Innenleuchte für Fahrzeuge, insbesondere für Kraftfahrzeuge hat im Ausführungsbeispiel ein gemeinsames Gehäuse 2 für mehrere unterschiedliche Beleuchtungsfunktionen. Dazu gehört auch eine Leseleuchte 3, die aufgrund der symmetrischen Unterteilung der Innenleuchte 1 beidseits einer mittleren Symmetrielinie L auch zwei mal vorhanden ist.

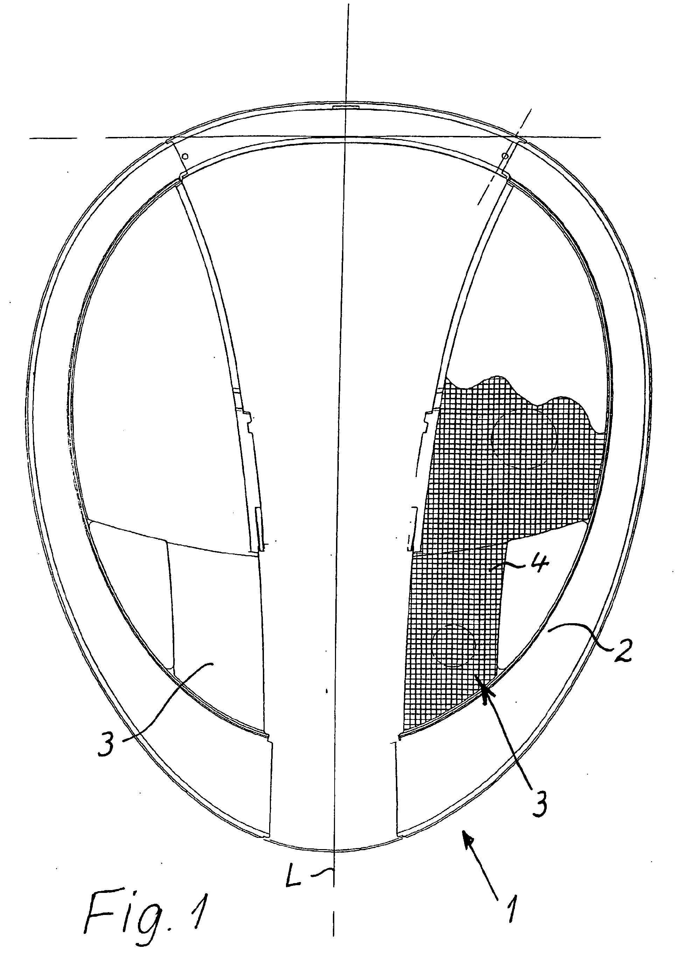

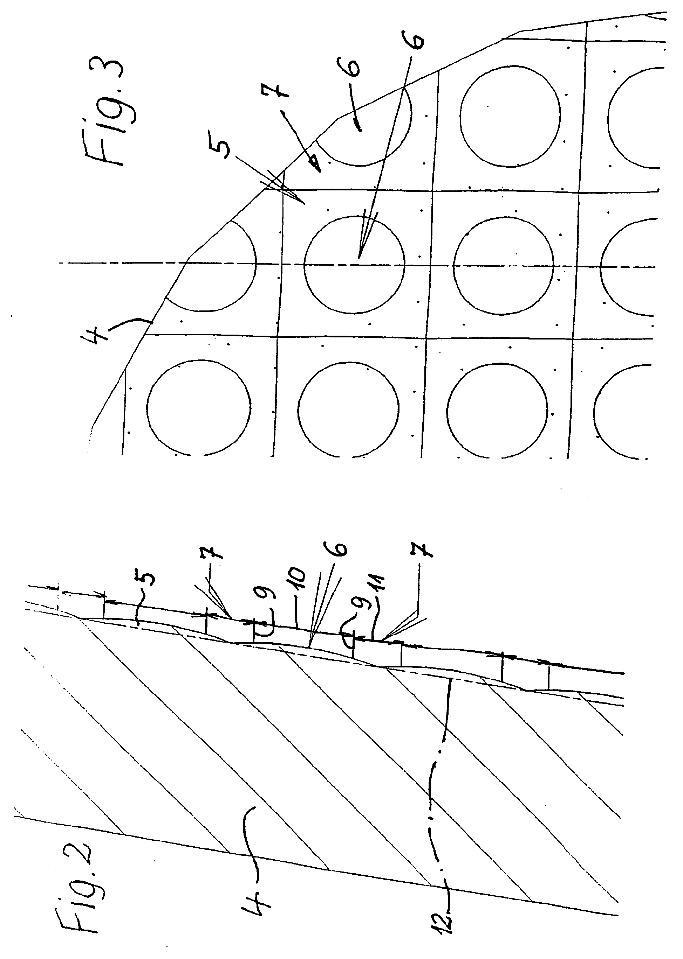

Die Innenleuchte 1 weist in den mit Leuchtfunktionen versehenen Abschnitten eine das oder die dahinter befindlichen, in der Zeichnung der besseren Deutlichkeit wegen weggelassenen Leuchtmittel abdeckende Streuscheibe 4 aus Kunststoff auf, welche an ihrer Oberfläche in den Fig.2 bis 4 dargestellte Optikelemente 5 zur Streuung oder Auslenkung des abgegebenen Lichts hat, die gemäß Fig.2 einstückig miteinander und mit ihr verbunden sind.

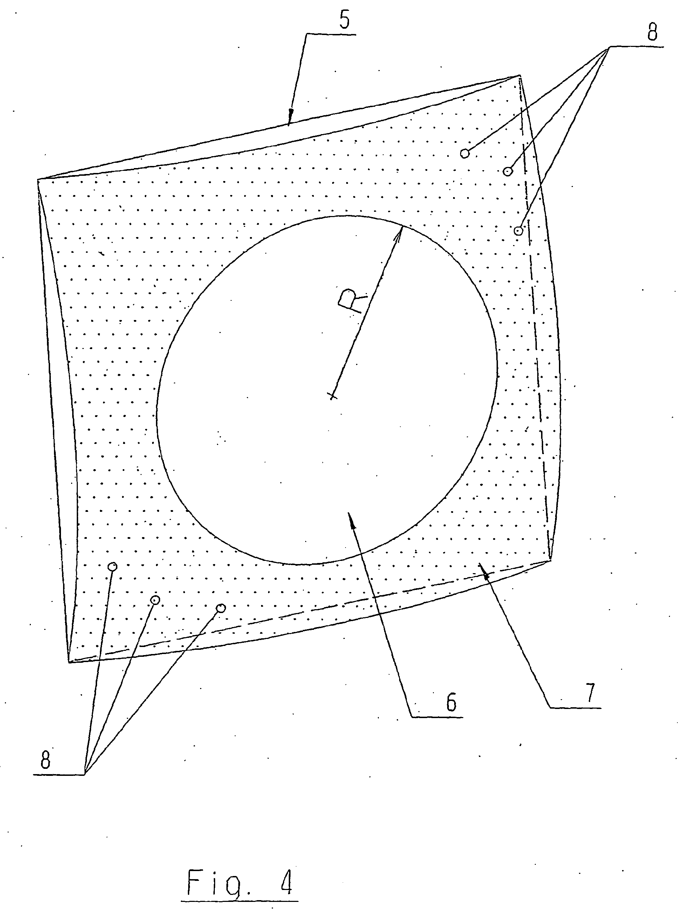

Anhand der Fig. 3 und 4 erkennt man, dass die an der Streuscheibe 4 vorgesehenen Optikelemente 5 einen ersten zentralen, nicht diffus streuenden Bereich 6 und einen zweiten, diesen ersten Bereich 6 im Ausführungsbeispiel ganz, bei abgewandelten Ausführungsformen aber eventuell auch nur teilweise umgebenden, diffus streuenden Bereich 7 hat. Der erste Bereich 6 ist dabei glatt und/oder poliert, um den dadurch fallenden Lichtanteil kaum oder gar nicht diffus zu streuen. Der zweite Bereich 7 weist gemäß Fig.4 das durchtretende Licht streuende Oberflächenrauhigkeiten 8 auf, die auch als Narbungen oder sonstige Strukturen gestaltet sein können, um das durch diesen Teil des Optikelements hindurchtretende Licht zu streuen und ihm die Blendwirkung zu nehmen. Bei einer schrägen Betrachtung einer derartig gestalteten Streuscheibe 4 wird also eine Blendwirkung des Betrachters vermieden, weil die durch den ersten zentralen Bereich 6 hindurchfallenden Lichtstrahlen an seinem Auge vorbeigeführt werden, während die mehr im Randbereich durchtretenden Lichtstrahlen, die von dem Betrachter direkt gesehen werden, diffus gestreut sind.

Im Ausführungsbeispiel ist der erste Bereich 6 etwa kreisförmig ausgebildet und von dem zweite Bereich 7, wie bereits erwähnt, vollständig umgeben, so dass sich von allen Seiten her eine übereinstimmende Lichtverteilung ergibt.

Das jeweilige Optikelement 5 ist im Ausführungsbeispiel viereckig beziehungsweise quadratisch begrenzt und die Optikelemente 5 liegen mit ihren Seiten jeweils einstückig aneinander, wie es vor allem bei gleichzeitiger Betrachtung der Fig.2 und 3 deutlich wird. Dabei sind die ersten Bereiche 6 und die zweiten Bereiche 7 in Fig.2 noch einmal durch gedachte Begrenzungslinien 9 und Maßpfeile 10 und 11 verdeutlicht, wobei die längeren Maßpfeile 10 zwischen zwei Begrenzungslinien 9 einen ersten Bereich 6 und die kurzen Maßpfeile 11 zwei zweite Bereiche 7 benachbarter Optikelemente 5 markieren.

Die Optikelemente können auf der dem Leuchtmittel zu- oder abgewandten Seite der Streuscheibe 4 angeordnet sein und haben jeweils eine gewölbte Oberfläche, die man deutlich in Fig.2 und auch in Fig.4 erkennt. Dieser gewölbte Anteil ist praktisch gegenüber einer durch eine strichpunktierte Linie 12 in Fig.2 angedeuteten Grundfläche vorgewölbt, wobei die Grundfläche 12 jeweils auch durch die Berührbereiche benachbarter Optikelemente 5 verläuft.

Die Optikelemente 5 haben in der Mitte ihres Grundrisses aufgrund ihrer Wölbung die größte Dicke und in den Rand- und vor allem in den Eckbereichen ihre geringste Dicke. Somit können sie eine gewisse Sammellinsen-Funktion erfüllen, die allerdings in den am Rand der jeweiligen Optikelemente 5 befindlichen streuenden Bereich 7 von diesem Streueffekt überlagert wird.

Im Ausführungsbeispiel ist das Verhältnis der Abmessungen des ersten Bereichs 6 und des zweiten Bereichs 7 für alle an der Streuscheibe 4 vorgesehenen Optikelemente 5 gleich. Dieses Verhältnis könnte aber zumindest bereichsweise auch unterschiedlich sein, um eine gezielte Lenkung des jeweiligen Lichts zu bewirken. Beispielsweise könnten am oder nahe dem Rand der Streuscheibe 4 Optikelemente 5 angeordnet sein, deren erster Bereich 6 kleiner als bei den im Mittelfeld dieser Streuscheibe 4 angeordneten Optikelementen 5 ist, falls vor allem am Rand der Streuscheibe 4 sonst eventuell doch noch eine zu große Blendgefahr bestehen sollte.

Wie bereits erwähnt, ist die Innenleuchte 1 im Ausführungsbeispiel für unterschiedliche Beleuchtungen und Leuchtmittel mit mehreren Streuscheiben 4 oder Streuscheibenabschnitten versehen, von denen wenigstens eine Streuscheibe 3 oder ein Streuscheibenabschnitt für eine Leseleuchte die erfindungsgemäßen Optikelemente 5 mit einem ersten Bereich 6 und einem zweiten streuenden Bereich 7 aufweist. In ausgeschaltetem Zustand ergibt dies ein gut angenährtes homogenes Erscheinungsbild der gesamten Innenleuchte 1, obwohl eine Leselichtoptik und eine Innenlichtoptik in dem gemeinsamen Gehäuse 2 enthalten sind.

Die Innenleuchte 1 hat an der ihr Leuchtmittel abdeckenden Streuscheibe 4 Optikelemente 5, die einen zentralen ersten nicht streuenden Bereich 6 und einen zweiten, diesen ganz oder teilweise umgebenden, diffus streuenden Bereich 2 aufweisen. Die Randbereiche der Optikelemente 5, die primär nicht für die Lichtverteilung bestimmt sind, reduzieren dadurch eine Blendung der Fahrzeuginsassen. Die Ausdehnung des diffus streuenden Optikbereichs 7 ist dabei durch den Auslauf des Optikelements 5 und den ersten zentralen Bereich 6 begrenzt. Die Optikelemente 5 sind dabei kalottenförmig gewölbt.

## Patentansprüche

1. Innenleuchte (1) für Fahrzeuge, insbesondere für Kraftfahrzeuge, mit einer das oder die Leuchtmittel abdeckenden Streuscheibe (4) aus Glas oder Kunststoff, welche an ihrer Oberfläche Optikelemente (5) zur Streuung oder Auslenkung des abgegebenen Lichts aufweist, **dadurch gekennzeichnet, dass** wenigstens ein Teil der an der Streuscheibe (4) vorgesehenen Optikelemente (5) einen ersten zentralen, nicht diffus streuenden Bereich (6) und einen zweiten, diesen ersten Bereich (6) ganz oder teilweise umgebenden, diffus streuenden Bereich (7) aufweist.

2. Innenleuchte nach Anspruch 1, **dadurch gekennzeichnet, dass** der erste Bereich (6) des jeweiligen Optikelements (5) glatt und/oder poliert ist.

3. Innenleuchte nach Anspruch 1 oder 2, **dadurch gekennzeichnet, dass** der zweite Bereich (7) des Optikelements das durchtretende Licht streuende Oberflächenrauhigkeiten (8), Narbungen oder Strukturen aufweist.

4. Innenleuchte nach einem der Ansprüche 1 bis 3, **dadurch gekennzeichnet, dass** der erste Bereich (6) etwa kreisförmig ausgebildet und von dem zweiten Bereich (7) vollständig umgeben ist.

5. Innenleuchte nach einem der Ansprüche 1 bis 4, **dadurch gekennzeichnet, dass** das jeweilige Optikelement (5) vieleckig oder viereckig begrenzt ist und die Optikelemente (5) mit ihren Seiten jeweils einstückig aneinander liegen.

6. Innenleuchte nach einem der Ansprüche 1 bis 5, **dadurch gekennzeichnet, dass** die Optikelemente auf der dem Leuchtmittel zu- oder abgewandten Seite der Streuscheibe (4) angeordnet sind und insbesondere eine gewölbte Oberfläche haben.

7. Innenleuchte nach einem der Ansprüche 1 bis 6, **dadurch gekennzeichnet, dass** die Optikelemente (5) in der Mitte ihres Grundrisses aufgrund der Wölbung die größte Dicke und in den Eckbereichen die geringste Dicke haben.

8. Innenleuchte nach einem der Ansprüche 1 bis 7, **dadurch gekennzeichnet, dass** das Verhältnis der Abmessungen des ersten Bereichs (6) und des zweiten Bereichs (7) für alle an der Streuscheibe (4) vorgesehenen Optikelemente (5) gleich oder zumindest bereichsweise unterschiedlich ist.

9. Innenleuchte nach einem der Ansprüche 1 bis 8, **dadurch gekennzeichnet, dass** am und nahe dem Rand der Streuscheibe (4) Optikelemente (5) angeordnet sind, deren erster Bereich (6) kleiner als bei den im Mittelfeld der Streuscheibe (4) angeordneten Optikelementen (5) ist.

10. Innenleuchte nach einem der vorstehenden Ansprüche, **dadurch gekennzeichnet, dass** sie für unterschiedliche Beleuchtungen und Leuchtmittel mehrere Streuscheiben (4) oder Streuscheibenabschnitte aufweist, von denen wenigstens eine Streuscheibe (4) oder ein Streuabschnitt für eine Leseleuchte die Optikelemente (5) mit einem ersten Bereich (6) und mit einem zweiten Bereich (7) aufweist.

## Claims

1. Internal light (1) for vehicles, in particular for cars, with a light-scattering disc (4) of glass or plastics materials covering a or the light means, which disc has on its surface optical elements (5) for scattering or deflecting the emitted light, **characterised in that** at least a proportion of the optical elements (5) provided on the light-scattering disc (4) have a first central, non-diffusedly scattering region (6) and a second, diffusedly scattering region (7) that wholly or partially surrounds this first region (6).

2. Internal light according to claim 1, **characterised in that** the first region (6) of the respective optical element (5) is smooth and/or polished.

3. Internal light according to claim 1 or 2, **characterised in that** the second region (7) of the optical element comprises surface roughnesses (8), granulations or structures that scatter the transmitted light.

4. Internal light according to one of claims 1 to 3, **characterised in that** the first region (6) has a roughly circular shape and is completely surrounded by the second region (7).

5. Internal light according to one of claims 1 to 4, **characterised in that** the respective optical element (5) has a polygonal or tetragonal boundary and the sides of the optical elements (5) in each case abut one another to form a closed structure.

6. Internal light according to one of claims 1 to 5, **characterised in that** the optical elements are arranged on the side of the light-scattering disc (4) facing towards or away from the light means and have in particular a curved or cambered surface.

7. Internal light according to one of claims 1 to 6, **characterised in that** the optical elements (5) have the greatest thickness in the middle of their layout on account of the curvature or camber, and have the least thickness in the corner regions.

8. Internal light according to one of claims 1 to 7, **characterised in that** the ratio of the dimensions of the first region (6) to those of the second region (7) is identical or differs at least regionally for all optical elements (5) provided on the light-scattering disc (4).

9. Internal light according to one of claims 1 to 8, **characterised in that** optical elements (5) are arranged on and in the vicinity of the edge of the light-scattering disc (4), the first region (6) of the optical elements (5) being smaller than in the case of the optical elements (5) arranged in the central area of the light-scattering disc (4).

10. Internal light according to one of the preceding claims, **characterised in that** it comprises a plurality of light-scattering discs (4) or light-scattering disc sections for different lights and light means, of which at least one light-scattering disc (4) or a light-scattering disc section for a reading light comprises the optical elements (5) with a first region (6) and with a second region (7).

## Revendications

1. Lampe intérieure (1) pour véhicules, en particulier pour véhicules automobiles, avec un verre diffuseur (4) en verre ou en matière plastique recouvrant la ou les ampoules, laquelle présente sur sa surface des éléments optiques (5) pour diffuser ou dévier la lumière émise, **caractérisée par le fait qu'**au moins une partie des éléments optiques (5) prévus sur le verre diffuseur (4) présente une première zone (6) centrale, diffusant de manière non diffuse et une deuxième zone (7), entourant entièrement ou partiellement cette première zone (6), diffusant de manière diffuse.

2. Lampe intérieure (1) selon la revendication 1, **caractérisée par le fait que** la première zone (6) de chaque élément optique considéré est lisse et/ou polie.

3. Lampe intérieure (1) selon la revendication 1 ou 2, **caractérisée par le fait que** la deuxième zone (7) de l'élément optique présente des rugosités de surface (8), des grenures ou des structures qui dispersent la lumière qui les traverse.

4. Lampe intérieure (1) selon l'une des revendications 1 à 3, **caractérisée par le fait que** la première zone (6) est de forme à peu près circulaire et entièrement entourée par la deuxième zone (7).

5. Lampe intérieure (1) selon l'une des revendications 1 à 4, **caractérisée par le fait que** chaque élément optique (5) est limité de manière polygonale ou carrée et que les éléments optiques (5) sont tous juxtaposés en une pièce par leurs côtés.

6. Lampe intérieure (1) selon l'une des revendications 1 à 5, **caractérisée par le fait que** les éléments optiques (5) sont disposés du côté du verre diffuseur (4) tourné vers l'ampoule ou opposé à celle-ci et ont en particulier une surface courbe.

7. Lampe intérieure (1) selon l'une des revendications 1 à 6, **caractérisée par le fait que** les éléments optiques (5) possèdent la plus grande épaisseur au centre de leur plan horizontal et la plus faible épaisseur dans les angles en raison de la courbure.

8. Lampe intérieure (1) selon l'une des revendications 1 à 7, **caractérisée par le fait que** le rapport des dimensions de la première zone (6) et de la deuxième zone (7) est identique ou au moins différent par secteurs pour tous les éléments optiques (5) prévus sur le verre diffuseur (4).

9. Lampe intérieure (1) selon l'une des revendications 1 à 8, **caractérisée par le fait qu'**au bord et à proximité du bord du verre diffuseur (4) sont disposés des éléments optiques (5) dont la première zone (6) est plus petite que sur les éléments optiques (5) disposés dans la partie centrale du verre diffuseur (4).

10. Lampe intérieure (1) selon l'une des revendications précédentes, **caractérisée par le fait qu'**elle présente plusieurs verres diffuseurs (4) pour différents éclairages et différentes ampoules, dont au moins un verre diffuseur (4) ou une section de diffusion pour une lampe de lecture présente les éléments optiques (5) avec une première zone (6) et avec une deuxième zone (7).
